# FASCICULE DE BREVET EUROPEEN

(11) **EP 3 022 404 B1**
(45) Date de publication et mention de la délivrance du brevet: **08.03.2017**
(21) Numéro de dépôt: 14790146.6
(22) Date de dépôt: 17.07.2014
(51) Int. Cl.: F04D 29/42, F04D 17/10, F01D 25/24, F01D 11/14, F01D 5/00, F02C 6/08, F04D 29/62, F04D 27/00

(54) **COUVERCLE DE COMPRESSEUR CENTRIFUGE DE TURBOMACHINE APTE À ÊTRE FIXÉ PAR L'AVAL PRÈS DE SON BORD AMONT, TURBOMACHINE COMPORTANT CE COUVERCLE**
ABDECKUNG EINES TURBOMASCHINEN-KREISELVERDICHTERS ZUR FESTEN VERBINDUNG ÜBER EINE ABSTRÖMSEITE NAHE DER ANSTRÖMKANTE DAVON SOWIE TURBOMASCHINE MIT DIESER ABDECKUNG
COVER OF A TURBOMACHINE CENTRIFUGAL COMPRESSOR CAPABLE OF BEING RIGIDLY CONNECTED VIA THE DOWNSTREAM SIDE NEAR TO THE UPSTREAM EDGE OF SAME, AND TURBOMACHINE COMPRISING THIS COVER

(30) Priorité: 18.07.2013 FR 1357109
(43) Date de publication de la demande: 25.05.2016
(73) Titulaire: Safran Aircraft Engines, 75015 Paris (FR)
(72) Inventeur: BROMANN, Alain, Marc, Lucien, F-77550 Moissy-Cramayel Cedex (FR); BENDERRADJI, Kamel, F-77550 Moissy-Cramayel Cedex (FR); REICHERT, Pamela, Dominique, Danièle, F-77550 Moissy-Cramayel Cedex (FR)
(74) Mandataire: Gevers & Orès
(86) Numéro de dépôt international: PCT/FR2014/051842
(87) Numéro de publication internationale: WO 2015/008000

(56) Documents cités:
- EP-A2- 1 167 722
- EP-A2- 2 206 882
- FR-A1- 2 931 521
- US-A- 4 687 412
- US-A1- 2011 002 774
- US-B2- 7 824 151

## Description

### Domaine technique :

La présente invention concerne la conception du couvercle d'un compresseur centrifuge dans une turbomachine. Elle vise plus particulièrement sa technique de montage dans la turbomachine pour préserver l'étanchéité du volume destiné aux gaz prélevés que ce couvercle définit avec le carter de la turbomachine à la périphérie du compresseur.

Le compresseur centrifuge a pour fonction dans une turbomachine d'insuffler l'air d'alimentation à haute pression dans la chambre de combustion. A cet effet, le rotor a une forme évasée, prenant l'air en sortie d'un compresseur axial pour le diriger radialement dans la veine de récupération allant vers la chambre de combustion. Le couvercle constitue le stator, c'est à dire la paroi extérieure de la veine d'écoulement de l'air autour du rotor.

Il est connu de prélever de l'air au niveau du compresseur centrifuge pour utiliser cet air à haute pression comme source de puissance pour des équipements de la turbomachine ou de l'aéronef. Des orifices pratiqués dans le couvercle permettent de prélever cet air dans la veine du compresseur pour l'envoyer dans le circuit qui doit le distribuer vers les équipements qui l'utilisent. Pour tirer pleinement bénéfice de ce prélèvement, il est important que le circuit soit étanche. Pour cela, le couvercle est mis en contact étanche avec des pièces du carter autour des orifices de prélèvement pour former un volume de récupération en entrée du circuit distribuant l'air à haute pression.

Or le couvercle d'un tel compresseur est une pièce délicate à installer. En effet, il doit assurer un jeu aussi faible que possible avec les pales du rotor pour optimiser le rendement du compresseur. Il doit aussi assurer la continuité de veine en amont et en aval. A contrario, les contraintes mécaniques et thermiques liées au fonctionnement de la turbine entraînent des déformations importantes de toutes les pièces dans la zone où se trouve le couvercle, en particulier des pales du rotor.

Il est assez courant de fixer le couvercle au carter par une bride annulaire positionnée en aval sur ce couvercle, au niveau de la zone de plus grand rayon. Or les orifices de prélèvement sont généralement situés dans une zone de rayon intermédiaire, plus en amont sur le couvercle. Dans ce cas, le boulonnage de cette bride sur le carter permet d'assurer facilement l'étanchéité du volume de récupération, en aval des orifices de prélèvement. Le problème se pose alors d'assurer l'étanchéité à la jointure du couvercle avec une autre pièce du carter, fermant le volume de récupération en amont des orifices de prélèvement. Pour obtenir ce résultat, l'étanchéité peut être assurée par des joints entre la pièce et le couvercle, comme c'est décrit dans le document US7824151, ou par un simple centrage, ainsi que c'est proposé dans le document EP2206882. Ces solutions limitent les fuites mais n'assurent pas une étanchéité parfaite, notamment à cause des déformations des pièces entre les différents régimes de fonctionnement de la turbomachine. Cela entraîne une perte de pression, donc une baisse de performances, à la fois pour le compresseur et pour le système de prélèvement de l'air haute pression.

Certaines conceptions de couvercles de compresseur, telle que celles décrites dans US2011/0002774 et FR2931521, utilisent une bride positionnée en amont sur le couvercle du compresseur, boulonnée au carter de la turbomachine pour fixer ce couvercle. Dans ce cas, le boulonnage de la bride permet d'assurer l'étanchéité du volume en amont du couvercle. Il est même possible de concevoir, comme c'est le cas dans FR2931521, une structure fermant en aval le volume qui entoure le couvercle du compresseur.

Cependant, lorsqu'une bride est boulonnée sur la partie amont du couvercle, notamment pour assurer l'étanchéité à ce niveau, il se pose un problème d'accessibilité aux moyens de fixation lors du montage. En effet, soit une pièce de structure ou une bride y bloque l'accès lorsque le couvercle est positionné pour le montage, soit, au mieux, l'espace situé directement derrière les trous de fixation est restreint par la forme même du couvercle. Il faut, dans ce cas, concevoir la structure de la turbomachine pour avoir un accès aux vis de fixation de la bride du couvercle par la cavité aval du compresseur axial situé devant le compresseur centrifuge.

La présente invention a pour objectif de proposer une solution simple pour fixer facilement le couvercle de son bord amont par un moyen de serrage au carter de la turbomachine et pouvant s'adapter, sans grande modification, à une conception où le carter de la turbomachine ne permet pas l'accès à cette partie du couvercle lors du montage.

### Présentation de l'invention:

L'invention concerne un couvercle de compresseur centrifuge destiné à être fixé à un carter de turbomachine, avec un bord amont et un bord aval dans le sens de l'écoulement des gaz traversant le compresseur, ledit couvercle comportant une pluralité d'orifices et des moyens de fixation. Ce couvercle est remarquable en ce que des moyens de fixation amont sont situés en amont par rapport aux orifices et sont accessibles par un outil de fixation au travers d'au moins un desdits orifices du couvercle.

L'invention atteint son objectif de faciliter le montage du couvercle en permettant l'accès par l'aval aux moyens de fixation lorsque le couvercle est mis en place. Des moyens de serrages peuvent avoir été pré-positionnés sur les moyens de fixation, il suffit alors de faire passer l'outil de fixation par l'orifice y donnant accès pour fixer le couvercle par serrage contre le carter.

Avantageusement, cette disposition correspond à des orifices destinés au prélèvement d'air. Le couvercle est donc initialement prévu pour participer à un système de distribution d'air haute pression en prélevant de l'air au niveau du compresseur. Dans ce cas, d'une part on est sûr que ces orifices sont correctement positionnés et dimensionnés pour ne pas perturber le fonctionnement du compresseur, d'autre part, il n'y a pas à modifier la conception du couvercle à ce niveau.

De préférence, lesdits moyens de fixations amont du couvercle de compresseur centrifuge comportent une bride extérieure et des trous de fixation perçant ladite bride, l'ensemble étant destiné à coopérer avec des moyens de serrage, du type vis et écrou, actionnables par l'outil de fixation. Les trous dans la bride sont faciles à usiner et à positionner sur la bride. Le système de vis et écrou, largement utilisé, permet de procéder simplement à la fixation du couvercle en serrant celui-ci contre le carter. Par exemple, chaque moyen de fixation amont définissant un axe correspondant à la rotation du moyen de serrage mobile pour son serrage, il existe au moins un desdits orifices du couvercle traversé par cet axe. En particulier, dans le cas où la fixation est faite par boulonnage, cela permet d'utiliser une clé à tige sans mécanisme complexe.

Avantageusement, ladite bride extérieure forme une paroi entourant complètement ledit couvercle. Cette bride, agencée pour assurer en amont desdits orifices une liaison circonférentielle étanche avec une pièce du carter lorsque les moyens de fixation sont serrés, permet d'empêcher l'air du compresseur passant par les orifices du couvercle de s'échapper par l'avant, lors du fonctionnement de la turbomachine. Tout d'abord, cela évite de mettre en communication l'espace recevant l'air s'échappant par les orifices du couvercle avec les étages amont de la turbomachine et d'en perturber le fonctionnement. Par ailleurs, des dispositifs déjà décrits dans les documents précédemment cités permettent d'assurer l'étanchéité de la liaison du couvercle avec le carter au niveau de son rayon le plus grand, en aval des orifices. Ainsi, lors du fonctionnement de la turbomachine, la mise en communication, avec l'extérieur du couvercle, de l'écoulement dans le compresseur par les orifices utilisés pour faire passer les outils de fixation n'est pas préjudiciable au rendement du compresseur puisque la pression s'équilibrera. De même, dans l'optique d'un prélèvement d'air pour des utilisations sur d'autres équipements, l'absence de fuites à ce niveau participe au fait de garder une pression élevée dans le circuit de distribution d'air.

Avantageusement, chaque trou de fixation de la bride peut recevoir une vis de serrage en passant par moins un desdits orifices du couvercle. Cela permet de faire passer, par exemple, les vis après avoir installé le couvercle sur le carter. Dans une variante, si les trous de la bride sont positionnés sur des goujons liés au carter, les orifices permettent de faire passer des écrous et de les installer sur les goujons.
De préférence, ladite bride s'étend dans un voisinage du bord amont du couvercle.

Dans un mode de réalisation particulier, le couvercle de compresseur centrifuge comporte en outre une bride aval de maintien au carter de la turbomachine, attachée à la paroi extérieure du couvercle entre lesdits orifices et le bord aval, et formant un moyen d'étanchéité. L'utilisation d'une bride de maintien en aval agencée pour assurer une liaison circonférentielle étanche contre le carter permet d'adapter facilement le couvercle pour assurer une étanchéité parfaite du volume de recueil des gaz prélevés et en permettre un montage facile. Avantageusement cette bride est boulonnée sur le carter de la turbomachine.

L'invention concerne également une turbomachine comportant un compresseur centrifuge avec un couvercle tel que précédemment décrit, dont le carter est agencé pour former une liaison étanche avec la bride amont du couvercle lorsque les moyens de serrage sont serrés.

Avantageusement, le carter est agencé pour former avec ledit couvercle au moins un volume fermé récupérant l'air passant au travers des orifices du couvercle.

Avantageusement, au moins une partie des orifices du couvercle et ledit volume de récupération d'air sont configurés pour participer à un système de prélèvement d'air.

### Description détaillée de l'invention :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente une coupe axiale d'un premier mode de réalisation d'un compresseur de turbomachine avec un couvercle selon l'invention.
La figure 2 effectue un agrandissement de la figure 1 sur la zone de fixation amont du couvercle avec un éclaté de la vis et de l'écrou.
La figure 3 présente une coupe axiale de la turbomachine avec le couvercle de la figure 1 en phase de montage.

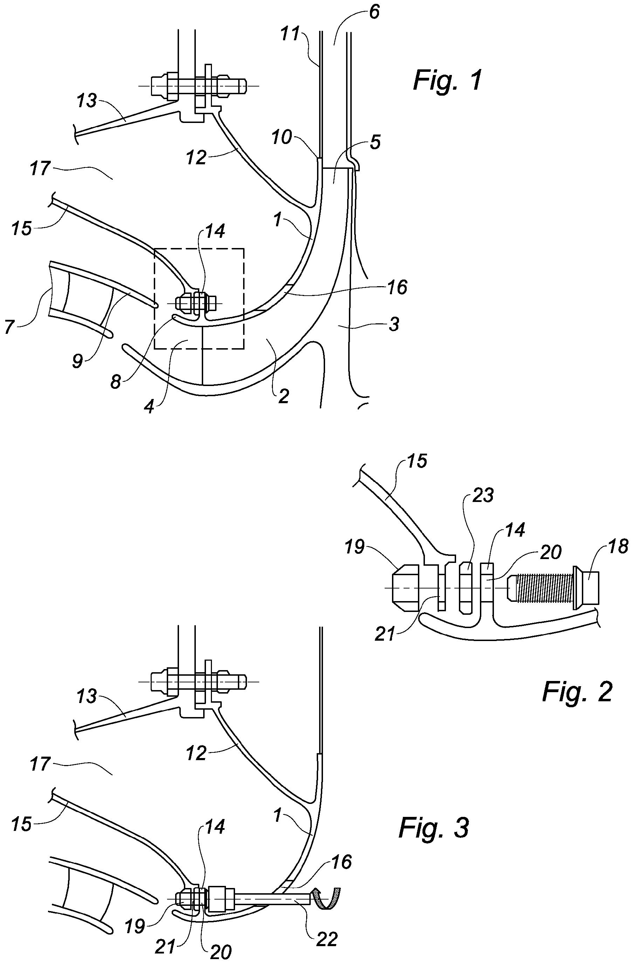

En référence à la figure 1, l'invention concerne le couvercle 1 d'un compresseur centrifuge, qui forme la paroi radialement externe de la veine dans laquelle tournent les pales 2 du rouet 3 du rotor. L'ensemble présente une symétrie de révolution autour d'un axe, non représenté mais qui serait horizontal par rapport à la figure 1 et en dessous des pièces dessinées. Le rotor, en tournant autour de cet axe, aspire l'air par son entrée 4, orientée axialement, pour l'expulser à plus forte pression par sa sortie 5, orientée radialement. D'une manière générale, ce compresseur décharge son air comprimé dans une veine 6 de récupération radiale destinée à alimenter la chambre de combustion, non représentée mais située sur la droite en référence à la figure 1, et il est alimenté en amont par un compresseur axial 7.

Le couvercle 1 est une pièce de révolution autour de l'axe de symétrie du compresseur dont la forme suit avec un jeu minimal la surface balayée par l'extrémité radiale des pales 2. Le couvercle 1 est par ailleurs agencé pour que son bord d'attaque amont 8 assure une continuité de forme avec la paroi 9 radialement externe de la veine du compresseur axial 7 et que son bord de fuite aval 10 assure la continuité de forme avec la paroi 11 de la veine 6 de récupération.

La fixation du couvercle sur le carter de la turbomachine doit permettre de le positionner avec une précision suffisante pour respecter les contraintes précédemment citées et aussi permettre au couvercle de se déplacer en fonction des conditions de fonctionnement de la turbomachine, afin de suivre les déformations des pales 2 en maintenant un jeu optimal. Plusieurs types de solutions sont proposés dans l'état de l'art, notamment une fixation du couvercle par deux brides, comme dans US2011/0002774 et EP2206882, déjà cités. En ce qui concerne le maintien du couvercle, ce montage par deux brides surdétermine les points de fixation du couvercle, ce qui doit être pris en compte dans la nature des liaisons réalisées. Il est cependant tout à fait possible de réaliser un tel montage, comme le montrent les documents cités dans l'état de l'art. Il entre dans l'invention d'utiliser d'autres combinaisons entre les brides en ajustant l'élasticité des liaisons qu'elles assurent.

Un premier mode de réalisation selon l'invention utilise une telle fixation avec deux brides. Une bride annulaire 12 attachée en aval, dans la partie de rayon maximal du couvercle 1 par rapport à l'axe de rotation, est boulonnée au bord d'une pièce circonférentielle 13 du carter. Par ailleurs, le couvercle est également fixé dans sa partie amont par une bride 14 à une autre pièce 15 du carter, sur toute sa circonférence. Cette bride 14 est une pièce tronconique qui s'étend radialement à l'extérieur du couvercle 1 et sépare le bord amont 8 du bord aval 10 sur toute la circonférence du couvercle. Elle est fixée au couvercle 1 très près du bord amont 8 du couvercle 1 et a une extension radiale faible. La liaison entre le couvercle et la pièce 15 du carter se fait donc très près du bord amont 8. Cette bride 14, par sa position, présente un intérêt complémentaire qui est exposé ci-après.

Dans certaines turbomachines, le couvercle participe également à une fonction de prélèvement d'air à haute pression au niveau du compresseur en vue de le l'introduire dans un circuit de distribution vers divers équipements à l'intérieur de l'aéronef.

Sur l'exemple présenté, le couvercle 1 est percé de plusieurs orifices 16, dont un est représenté sur la coupe de la figure 1. Ces orifices 16 sont situés sur une couronne autour de l'axe de symétrie, de rayon valant approximativement le rayon minimal du couvercle, sur le bord amont 8, augmenté du quart de la différence avec le rayon maximal, sur le bord aval 10. Vu autrement, ces orifices se trouvent également dans une zone de courbure maximale du profil axial du couvercle 1. De cette manière ils se trouvent dans une zone où le couvercle joue un rôle moindre pour contenir l'écoulement dans le compresseur. Ils peuvent donc être agencés avec une section suffisante pour laisser passer une fraction de l'air circulant dans le rotor vers le côté extérieur du couvercle sans détériorer de manière significative le fonctionnement du compresseur.

L'air prélevé est recueilli dans un volume de recueil 17, lui-même mis en communication avec un circuit de distribution, non représenté. Sur l'exemple présenté dans la figure 1, ce volume 17 est délimité, près du couvercle, par une partie du couvercle 1 avec :
- en aval, la bride aval 12 puis une pièce annulaire 13 du carter,
- en amont, la bride amont 14 puis une pièce annulaire 15 du carter.

Ainsi que c'est représenté sur la figure 2, La bride amont est fixée sur la pièce 15 par des systèmes formés d'une vis 18 et d'un écrou 19 traversant des trous 20 et 21, de la bride 14 et de la pièce 15. Ces trous sont bien sûr mis en vis-à-vis lors du montage du couvercle. Ces trous, notamment les trous 20 pratiqués dans la bride 14, sont répartis circonférentiellement. Les trous 20 perçant la bride 14 forment donc, avec la partie de bride 14 qui les entoure, autant de moyens de fixation attachés au couvercle 1. Ces moyens de fixation 20 coopèrent avec les trous 21 disposés sur le bord de la pièce annulaire 15 et les moyens de boulonnage, 18 et 19, pour presser la bride 14 contre la pièce 15. Les parties en contact de la bride et du bord de la pièce 15 sont agencées, éventuellement avec une cale d'ajustement 23 interposée, pour assurer l'étanchéité de la liaison vis-à-vis de l'air à haute pression, grâce à la pression exercée par les moyens de boulonnage 18-19 lorsqu'ils sont serrés. De manière similaire, la bride aval 12 est boulonnée sur le bord de la pièce 13 du carter et assure l'étanchéité du volume 17 de recueil de l'air prélevé du côté aval du couvercle 1.

La bride 12 s'étend généralement radialement à l'extérieur du couvercle, ce qui permet d'accéder à son extrémité boulonnée sur le carter par l'aval de cette bride, lors des opérations de montage ou de démontage du couvercle.

La difficulté de montage de cette configuration réside dans le fait que, pour assurer l'étanchéité en amont du couvercle, la pièce 15 du carter se rapproche du bord amont 8 du couvercle 1, là où son rayon est le plus faible. Lors du montage dans la turbomachine, le couvercle est installé par l'aval des pièces du carter et du compresseur déjà montées, comme c'est illustré sur la figure 3. Le couvercle 1, de même que la bride aval 12, bloquent donc l'accès aux moyens de fixation 20 et de boulonnage 18-19. Dans le couvercle selon l'invention, les orifices 16 du couvercle 1 prévus pour le prélèvement de l'air ont été placés en face des trous de fixation 20 dans la bride 14, de telle sorte qu'un outil de fixation, par exemple une clé de serrage 22, puisse venir prendre la tête de la vis 18, non visible sur la figure 3, traversant les trous 20 de la bride 14 et les trous 21 de la pièce 15 du carter, pour le visser sur l'écrou 19.

Dans l'exemple présenté, l'écrou 19 est fixé en face du trou 21 de la pièce 15 du carter, sur son côté amont, et bloqué en rotation. On peut donc installer le couvercle par l'arrière du carter pour y visser les vis 18 dans les écrous 19 au travers des trous 20 de la bride et des trous 21 de la pièce 15 du carter, qui auront été préalablement alignés. L'orifice 16 de prélèvement laisse passer la tige d'une clé 22 alignée avec l'axe du trou de fixation 20, ce qui permet de tourner ladite clé pour visser la vis 18. De plus, tout en respectant le critère de fonctionnement du compresseur, cet orifice 16 est assez large pour laisser passer la vis 18 de manière à l'introduire dans l'écrou 19 au travers des trous 20 et 21, ainsi que la tête de la clé 22 venant coopérer avec la tête de la vis 18.

Dans une variante de réalisation, la tête de la clé 22 peut être moins large que celle de la vis 18, contrairement à ce qui est représenté sur la figure 3, si elle coopère avec un motif en creux dans la tête de la vis. De la sorte, les vis 18 peuvent avoir été pré-positionnées sur les trous de fixation 20 de la bride amont 14 du couvercle avant sa mise en place sur le carter. Dans ce cas, la section de l'orifice 16 de prélèvement ne doit laisser passer qu'une clé de serrage 22 relativement fine.

Dans une autre variante de réalisation, le sens de mise en place des vis 18, ou des écrous 19 est inversé. La vis 18, bloquée en rotation sur la pièce 15 du carter, forme donc un goujon sur lequel vient se positionner le trou 20 de la bride 14, avant de visser l'écrou 19.

## Revendications

1. Couvercle de compresseur centrifuge destiné à être fixé à un carter (13, 15) de turbomachine, avec un bord amont (8) et un bord aval (10) dans le sens de l'écoulement des gaz traversant le compresseur, ledit couvercle (1) comportant une pluralité d'orifices (16) et des moyens de fixation au carter, couvercle **caractérisé en ce que** des moyens de fixation amont (20) sont situés en amont par rapport aux orifices (16) et sont accessibles par un outil de fixation (22) au travers d'au moins un desdits orifices (16) du couvercle (1).

2. Couvercle de compresseur centrifuge selon la revendication 1 dans lequel lesdits orifices (16) sont destinés à un prélèvement d'air dans le compresseur.

3. Couvercle de compresseur centrifuge selon l'une quelconque des revendications 1 et 2, dans lequel lesdits moyens de fixations amont comportent une bride (14) extérieure et des trous de fixation (20) perçant ladite bride, l'ensemble étant destiné à coopérer avec des moyens de serrage (18-19), du type vis (18) et écrou (19), actionnables par l'outil de fixation (22).

4. Couvercle de compresseur centrifuge selon la revendication 3, dans lequel ladite bride (14) extérieure forme une paroi entourant complètement ledit couvercle (1).

5. Couvercle de compresseur centrifuge selon la revendication 4, configuré pour que chaque trou de fixation (20) peut recevoir une vis de serrage (18) en passant par moins un desdits orifices (16).

6. Couvercle de compresseur centrifuge selon l'une quelconque des revendications 3 à 5 dans lequel la dite bride (14) s'étend dans un voisinage du bord amont (8) du couvercle (1).

7. Couvercle de compresseur centrifuge selon l'une quelconque des revendications 3 à 6 comportant en outre une bride (12) aval de maintien au carter (13) de la turbomachine, attachée à la paroi extérieure du couvercle (1) entre lesdits orifices (16) et le bord aval (10), et formant un moyen d'étanchéité.

8. Turbomachine comportant un compresseur centrifuge avec un couvercle (1) selon l'une des revendications 3 à 7, dont le carter (15) est agencé pour former une liaison étanche avec la bride (14) amont du couvercle (1) lorsque les moyens de serrage (18-19) sont serrés.

9. Turbomachine selon la revendication 8 dont le carter (13, 15) est agencé pour former avec ledit couvercle (1) au moins un volume (17) fermé récupérant l'air passant au travers des orifices (16) du couvercle.

10. Turbomachine selon la revendication 9 dans laquelle au moins une partie des orifices (16) du couvercle (1) et ledit volume (17) de récupération d'air sont configurés pour participer à un système de prélèvement d'air.

## Patentansprüche

1. Deckel eines Zentrifugalkompressors, der ausgelegt ist, um an einem Gehäuse (13, 15) einer Turbomaschine befestigt zu sein, wobei ein vorgelagerter Rand (8) und ein nachgelagerter Rand (10) in der Richtung der Strömung der Gase den Kompressor durchqueren, wobei der Deckel (1) eine Vielzahl von Öffnungen (16) und Mittel zur Befestigung am Gehäuse umfasst, wobei der Deckel **dadurch gekennzeichnet ist, dass** die vorgelagerten Mittel zur Befestigung (20) mit Bezug auf die Öffnungen (16) vorgelagert sind, und durch ein Befestigungswerkzeug (22) durch mindestens eine der Öffnungen (16) des Deckels (1) zugänglich sind.

2. Deckel eines Zentrifugalkompressors nach Anspruch 1, wobei die Öffnungen (16) ausgelegt sind, um Luft vom Kompressor zu entnehmen.

3. Deckel eines Zentrifugalkompressors nach einem der Ansprüche 1 und 2, wobei die vorgelagerten Mittel zur Befestigung einen äußeren Flansch (14) und Befestigungslöcher (20) umfassen, die den Flansch durchbrechen, wobei die Einheit dazu ausgelegt ist, um mit Klemmmitteln (18 - 19) vom Typ Schraube (18) und Schraubenmutter (19) zusammenzuarbeiten, die durch das Befestigungswerkzeug (22) betätigt werden können.

4. Deckel eines Zentrifugalkompressors nach Anspruch 3, wobei der äußere Flansch (14) eine Wand bildet, die den Deckel (1) vollständig umgibt.

5. Deckel eines Zentrifugalkompressors nach Anspruch 4, der so konfiguriert ist, dass jedes Befestigungsloch (20) eine Klemmschraube (18) aufnehmen kann, indem sie durch mindestens eines der Öffnungen (16) verläuft.

6. Deckel eines Zentrifugalkompressors nach einem der Ansprüche 3 bis 5, wobei sich der Flansch (14) in der Nähe des vorgelagerten Rands (8) des Deckels (1) erstreckt.

7. Deckel eines Zentrifugalkompressors nach einem der Ansprüche 3 bis 6, umfassend außerdem einen nachgelagerten Flansch (12) zum Halten am Gehäuse (13) der Turbomaschine, befestigt an der äußeren Wand des Deckels (1), zwischen den Öffnungen (16) und dem nachgelagerten Rand (10) und ein Dichtungsmittel bildend.

8. Turbomaschine, umfassend einen Zentrifugalkompressor mit einem Deckel (1) nach einem der Ansprüche 3 bis 7, deren Gehäuse (15) angeordnet ist, um eine dichte Verbindung mit dem vorgelagerten Flansch (14) des Deckels (1) zu bilden, wenn die Klemmmittel (18 - 19) geklemmt sind.

9. Turbomaschine nach Anspruch 8, deren Gehäuse (13, 15) angeordnet ist, um mit dem Deckel (1) mindestens ein geschlossenes Volumen (17) zu bilden, das die Luft wiedergewinnt, die durch Öffnungen (16) des Deckels verlauft.

10. Turbomaschine nach Anspruch 9, wobei mindestens ein Teil der Öffnungen (16) des Deckels (1) und das Volumen (17) zur Wiedergewinnung von Luft konfiguriert sind, um Teil eines Systems zur Entnahme von Luft zu sein.

## Claims

1. Cover for a centrifugal compressor which is intended to be fixed to a casing (13, 15) of a turbine engine, comprising an upstream edge (8) and a downstream edge (10) in the flow direction of the gases crossing the compressor, said cover (1) comprising a plurality of openings (16) and means for fixing to the casing, said cover being **characterised in that** the upstream fixing means (20) are located upstream relative to the openings (16) and are accessed by a fixing tool (22) through at least one of said openings (16) in the cover (1).

2. Cover for a centrifugal compressor according to claim 1, wherein said openings (16) are intended for an offtake of air in the compressor.

3. Cover for a centrifugal compressor according to either claim 1 or claim 2, wherein said upstream fixing means comprise an outer flange (14) and fixing holes (20) which pierce said flange, the unit being intended to cooperate with clamping means (18-19), of the screw (18) and nut (19) type, which can be actuated by the fixing tool (22).

4. Cover for a centrifugal compressor according to claim 3, wherein said outer flange (14) forms a wall which completely surrounds said cover (1).

5. Cover for a centrifugal compressor according to claim 4, configured such that each fixing hole (20) can receive one clamping screw (18) passing through at least one of said openings (16).

6. Cover for a centrifugal compressor according to any of claims 3 to 5, wherein said flange (14) extends close to the upstream edge (8) of the cover (1).

7. Cover for a centrifugal compressor according to any of claims 3 to 6, further comprising a downstream flange (12) for holding against the casing (13) of the turbine engine, which flange is fastened to the outer wall of the cover (1) between said openings (16) and the downstream edge (10) and forms a sealing means.

8. Turbine engine comprising a centrifugal compressor having a cover (1) according to any of claims 3 to 7, the casing (15) of which is arranged so as to form a sealed connection with the upstream flange (14) of the cover (1) when the clamping means (18-19) are clamped.

9. Turbine engine according to claim 8, the casing (13, 15) of which is arranged so as to form, together with said cover (1), at least one closed space (17) which recovers the air passing through the openings (16) in the cover.

10. Turbine engine according to claim 9, wherein at least some of the openings (16) in the cover (1), and said air recovery space (17), are designed to participate in an air offtake system.
